# EUROPÄISCHE PATENTSCHRIFT

(11) **EP 1 275 855 B1**
(45) Veröffentlichungstag und Bekanntmachung des Hinweises auf die Patenterteilung: **09.11.2005**
(21) Anmeldenummer: 02405519.6
(22) Anmeldetag: 24.06.2002
(51) Int. Cl.: F16B 1/00

(54) **Bauteil zum Niederhalten von Messleitungen**
Member for holding down measurement leads
Pièce pour maintenir des conducteurs de mesure

(30) Priorität: 13.07.2001 CH 13052001
(43) Veröffentlichungstag der Anmeldung: 15.01.2003
(73) Patentinhaber: Alstom Technology Ltd, 5400 Baden (CH)
(72) Erfinder: Brehm, Armin, 5415 Nussbaumen (CH); Radovik, Goran, 5417 Untersiggenthal (CH); Wetter, Hugo, 5033 Buchs (CH)

(56) Entgegenhaltungen:
- EP-A- 0 691 478
- DE-A- 19 705 413
- FR-A- 2 559 558
- US-A- 6 164 863

## Beschreibung

### Technisches Gebiet

Die Erfindung betrifft ein Bauteil zum Niederhalten von Messleitungen und Messvorrichtungen in einer dafür vorgesehenen Nut eines Maschinenteiles (DE 197 05 413 A).

### Stand der Technik

Es ist bekannt, Maschinen, wie beispielsweise thermische Turbomaschinen, mit Hilfe spezieller Messvorrichtungen während des Betriebes zu überwachen, um Störungen in der Maschine schnell erkennen zu können. Einerseits ist es damit möglich, aufgrund umgehend ausgeführter manueller oder automatischer Korrekturen Beschädigungen an der Maschine im Betriebszustand bzw. im schlimmsten Falle einen Stillstand der Maschine zu verhindern, andererseits bieten derartige Messungen ein Potential für Verbesserungen an der Maschine, indem Schwachstellen aufgedeckt werden.

Die Messleitungen werden in Nuten, welche üblicherweise in die betreffenden Maschinenteile eingefräst werden, verlegt. Um bei der Montage der Messleitungen zu gewährleisten, dass diese in den dafür vorgesehnen Nuten bleiben, müssen spezielle Bauteile, sogenannte Niederhalter, eingesetzt werden.

Bekannt ist beispielsweise die Verwendung eines Schwerspannstiftes als Niederhalter für Messleitungen, welche bei Gasturbinen verwendet werden. Der Schwerspannstift wird dabei in eine Quernut, die senkrecht zur Nut für die Messleitungen angeordnet ist, eingepresst. Nachteilig bei dieser Lösung sind einerseits die hohen Kosten, welche verursacht werden durch die notwendigen sehr exakte Flanken beim Fräsen der Quernut und andererseits vorprogrammierte Ausfälle aufgrund der kaum zu vermeidenden punktuellen Auflage des Schwerspannstiftes auf den Messleitungen bzw. Messvorrichtungen.

Diese Nachteile versuchte man durch eine andere bekannte technische Lösung zu vermeiden, bei welcher entlang der im Maschinenteil angeordneten Nut für die Aufnahme der Messleitungen voneinander beabstandete Bohrungen angefertigt werden. Diese Bohrungen weisen einen Durchmesser auf, der grösser ist als die Nutbreite. Die Tiefe der Bohrungen ist geringer als die Tiefe der Nut. Um die Messleitungen in der Nut niederzuhalten, werden Sicherungsringe, welche an einer Seite offen sind, in die Bohrungen eingesetzt. Diese Sicherungsringe benötigen aber zum Einfügen und Spannen eine hinterstochene Nut, so dass auch bei dieser Lösung der Fertigungsaufwand relativ hoch ist. Ein weiterer Nachteil besteht darin, dass die Spannkraft des Sicherungsringes nur gering ist und diese während des Betriebes der Gasturbine sogar noch nachlässt, so dass es vorkommt, dass der Sicherungsring federbelastet wegspringt und seine Aufgabe als Niederhalter damit überhaupt nicht mehr wahrnehmen kann.

### Darstellung der Erfindung

Die Erfindung versucht, diese Nachteile des bekannten Standes der Technik zu vermeiden. Ihr liegt die Aufgabe zugrunde, ein Bauteil zum Niederhalten von Messleitungen und Messvorrichtungen in einer dafür vorgesehenen Nut einer Maschine zu entwickeln, welches einerseits einfach und damit kostengünstig herstellbar und anderseits leicht und ohne Spezialwerkzeuge montierbar ist, und welches auch während unterschiedlichster Betriebsbedingungen der Maschine zuverlässig die Messleitungen in der Nut hält.

Diese Aufgabe wird erfindungsgemäss dadurch gelöst, dass das Bauteil in Form einer Scheibe ausgebildet ist, welche an ihrem Umfang eine Schneidkante aufweist, wobei die Schneidkante nicht durchgängig ausgebildet ist, sondern aus zwei sich umfangsmässig gegenüberliegenden Teilschneidkanten besteht. in der Scheibe ist zentral eine Öffnung in Form eines Innensechskantes angeordnet.

Das Verfahren zum Einbau der erfindungsgemässen Scheibe ist dadurch gekennzeichnet, dass zuerst die Scheibe derart in die Bohrung der Nut eingelegt wird, dass die beiden Teilschneidkanten in Längsrichtung der Nut weisen, dass anschliessend ein Innensechskant-Schlüssel in die Öffnung der Scheibe eingeführt wird und dass schliesslich der Schlüssel bei gleichzeitigem Nachuntendrücken der Scheibe gedreht wird, so dass sich die Schneidkanten in das Material des Maschinenbauteiles einschneiden und sich festklemmen.

Die Vorteile der Erfindung bestehen einerseits darin, dass das erfindungsgemässe Bauteil kostengünstig herstellbar ist, denn es ist ein sehr einfach gestaltetes Bauteil. Andererseits sind vorteilhaft zur Montage des Bauteiles in die Nut keine Spezialwerkzeuge notwendig. Die in die Nut des Maschinenbauteiles einzubringende Bohrung zur Aufnahme des erfindungsgemässen Bauteiles ist eine ganz normale Bohrung ohne eine speziell erforderliche Toleranz bzw. ohne eine hinterstochene Nut. Mit dieser technischen Lösung ist eine einfache Möglichkeit zur Standardisierung gegeben. Neue Scheiben passen problemlos in alte Bohrungen und alte Scheiben in neue Bohrungen.

Es ist zweckmässig, wenn die Schneidkante in halber Höhe der Scheibe angeordnet ist und einen Flankenwinkel (α/2) von 30 ° aufweist. Dann treten beim Einbau keine Verkantungen auf.

Weiterhin ist es von Vorteil, wenn die Scheibe zum Niederhalten der Messleitungen in der Nut des Maschinenteiles aus einem austenitischen Stahl hergestellt wird und das Maschinenteil mit der Nut dagegen aus einem ferritischen Material besteht. Da das austenitischen Material gegenüber dem ferritischen Material einen höheren Wärmeausdehnungskoeffizienten besitzt, dehnt sich die austenitische Scheibe während des Betriebes aufgrund der Wärmeentwicklung mehr aus als das ferritische Maschinenteil mit der Nut. Als Folge dessen verklemmt sich die Scheibe, so dass diese sehr fest in der Nut sitzt und eine stabile Niederhaltung der Messleitungen gewährleistet.

### Kurze Beschreibung der Zeichnung

In der Zeichnung sind zwei Ausführungsbeispiele der Erfindung dargestellt.

Es zeigen:
- Fig. 1: eine Draufsicht auf das erfindungsgemässe Bauteil in einer ersten Ausführungsform;
- Fig. 2: einen Schnitt durch das Bauteil entlang der Linie II-II in Fig.1;
- Fig. 3: eine Seitenansicht des Bauteiles gemäss Fig. 1;
- Fig. 4: einen Schnitt durch das Bauteil entlang der Linie IV-IV in Fig. 3;
- Fig. 5: eine Seitenansicht des erfindungsgemässen Bauteiles in einer zweiten Ausführungsform;
- Fig. 6: eine perspektivische Darstellung des in das Maschinenteil eingebauten erfindungsgemässen Bauteiles.

Es sind nur die für die Erfindung wesentlichen Merkmale dargestellt. Gleiche Elemente haben in unterschiedlichen Figuren gleiche Bezugszeichen.

### Wege zur Ausführung der Erfindung

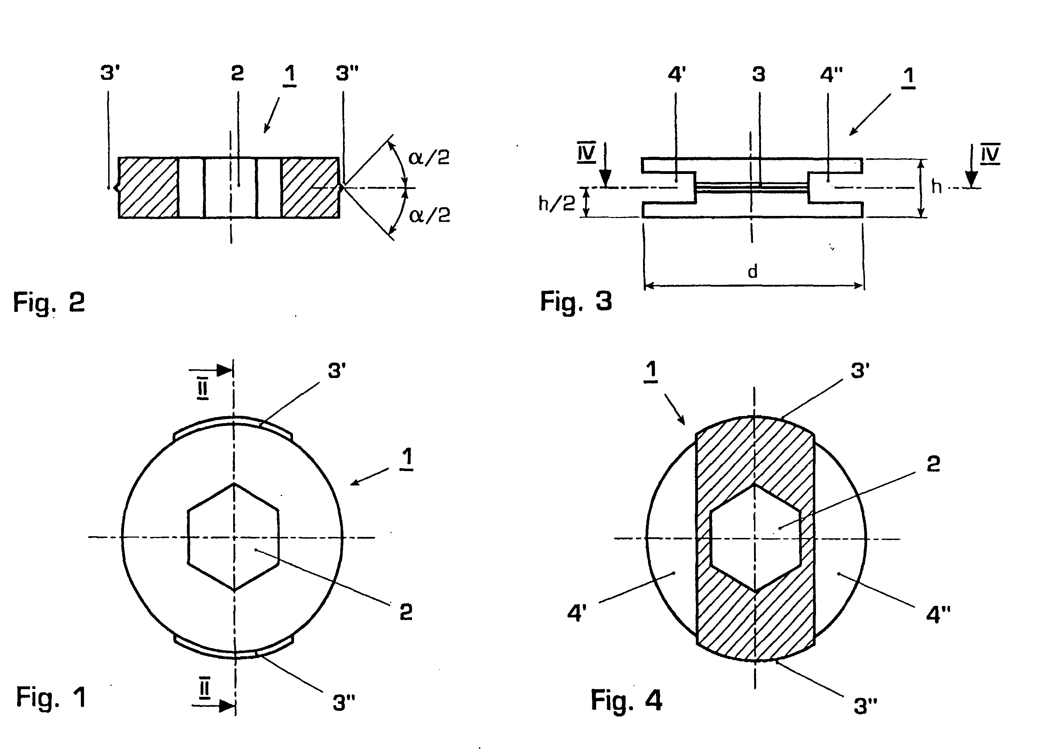

Nachfolgend wird die Erfindung anhand von Ausführungsbeispielen und der Fig. 1 bis 6 näher erläutert.

Die Fig. 1 bis 4 zeigen zunächst das erfindungsgemässe Bauteil in einer ersten Ausführungsvariante in verschiedenen Darstellungen und sind vorteilhafterweise gleichzeitig zur Beschreibung der Erfindung heranzuziehen.

Fig. 1 ist eine Draufsicht auf das Bauteil, in Fig. 2 ist ein Schnitt entlang der Linie II-II in Fig. 1 dargestellt, Fig. 3 zeigt eine Seitenansicht in Richtung Schneidkante und in Fig. 4 ist ein Schnitt entlang der Linie IV-IV in Fig. 3 dargestellt.

Das erfindungsgemässe Bauteil ist in Form einer Scheibe 1 mit einer kreisförmigen Grundfläche mit einem Durchmesser d ausgebildet. Die Scheibe 1 weist mittig eine Öffnung 2 in Form eines Innensechskantes auf. Eine weitere Besonderheit der Scheibe 1 besteht darin, dass die Scheibe 1 an ihrem Umfang eine Schneidkante 3 besitzt, wobei diese nicht durchgängig am gesamten Umfang ausgebildet ist, sondern aus zwei sich umfangsmässig gegenüberliegenden Teilschneidkanten 3', 3", welche symmetrisch zueinander angeordnet sind, besteht. Ausserdem ist die Schneidkante 3 in halber Höhe h der Scheibe 1 angeordnet. Sie weist einen Flankenwinkel α/2 von 30 ° auf. Dies führt vorteilhaft dazu, dass beim Einbau der Scheibe 1 keine Verkantungen auftreten. Bei der in den Fig. 1 bis 4 dargestellten Ausführungsform weist die Scheibe 1 gemäss Fig. 3 bzw. 4 an den Stellen, an denen umfangsmässig keine Teilschneidkanten 3', 3" angeordnet sind, jeweils eine seitliche Ausnehmung 4', 4" auf, wobei die Ausnehmungen 4' und 4" geometrisch deckungsgleich sind.

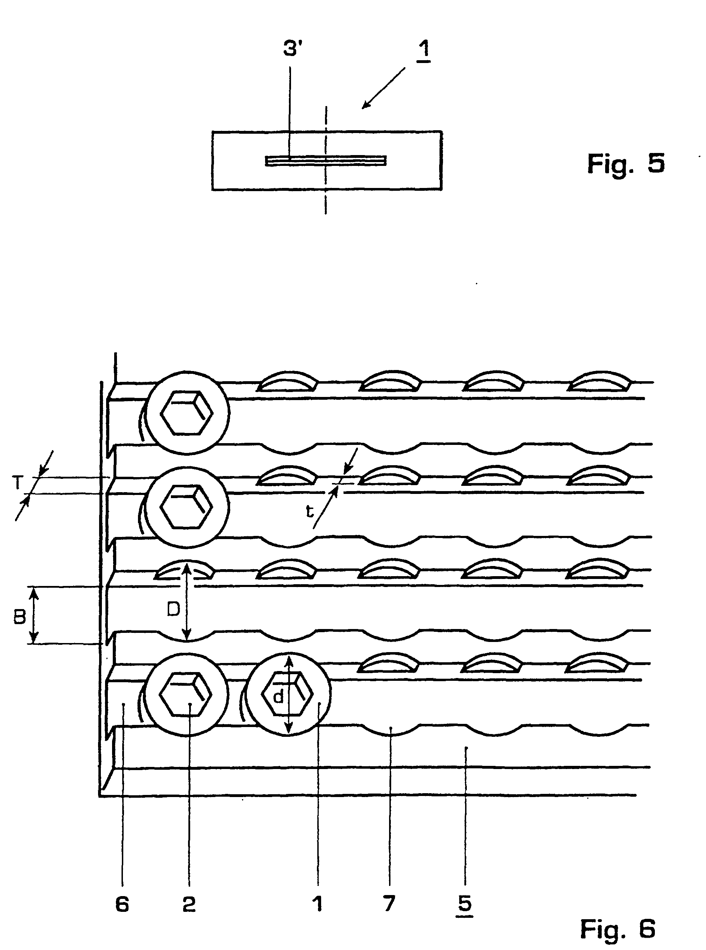

Einfacher ist das Ausführungsbeispiel gemäss Fig. 5. Dort ist eine Seitenansicht der Scheibe 1 mit der Teilschneidkante 3' abgebildet. Der einzige Unterschied zum ersten Ausführungsbeispiel (vgl. Fig. 3) besteht darin, dass an den Stellen, an denen keine Teilschneidkanten 3', 3" am Umfang angeordnet sind, auch keine Ausnehmungen 4', 4" vorhanden sind. Dadurch ist das Bauteil insgesamt gesehen stabiler und der Innensechskant 2 ist in seiner Grösse auch nicht mehr durch die (hier nicht vorhandenen) Ausnehmungen 4', 4" limitiert.

Fig. 6 zeigt in einer perspektivischen Darstellung das erfindungsgemässe Bauteil bzw. mehrere derartige Bauteile im eingebauten Zustand.

Mit Pos. 5 ist das gesamte Maschinenteil bezeichnet. In das Maschinenteil 5 sind Nuten 6 mit einer Nutbreite B und einer Nuttiefe T eingefräst, die der Aufnahme von hier nicht dargestellten Messleitungen dienen. In jeder Nut 6 sind voneinander beabstandete Bohrungen 7 eingebracht, die einen grösseren Durchmesser D als die Nutbreite B und einer geringeren Tiefe t als die Nuttiefe T aufweisen. Der Durchmesser D der Bohrung 7 nur geringfügig grösser als der Durchmesser d der Scheibe 1 zum Niederhalten der Messleitungen.

Zum Einbau der erfindungsgemässen Scheibe 1 wird diese zunächst derart in die Bohrung 7 eingelegt wird, dass die beiden Teilschneidkanten 3', 3" in Längsrichtung der Nut 6 weisen. Danach wird ein Innensechskant-Schlüssel in die Öffnung 2 der Scheibe 1 eingeführt wird. Der Innensechskant-Schlüssel wird anschliessend bei gleichzeitigem Nachuntendrücken der Scheibe 1 gedreht, so dass sich die Schneidkanten 3', 3" in das Material des Maschinenteiles 5 einschneiden und sich festklemmen.

Es ist von Vorteil, wenn die erfindungsgemässe Scheibe 1 zum Niederhalten der Messleitungen in der Nut 6 des Maschinenteiles 5 aus einem austenitischen Stahl, beispielsweise einem 18.8CrNi-Stahl hergestellt wird und das Maschinenteil 5, in welches die Scheibe 1 eingedreht wird, dagegen aus einem ferritischen Material, beispielsweise einem ferritischen Stahlguss, besteht. Da das austenitischen Material gegenüber dem ferritischen Material einen höheren Wärmeausdehnungskoeffizienten besitzt, dehnt sich die austenitische Scheibe 1 während des Betriebes aufgrund der Wärmeentwicklung mehr aus als das ferritische Maschinenteil 5. Als Folge dessen verklemmt sich die Scheibe 1, so dass diese sehr fest in der Nut 6 sitzt und eine stabile Niederhaltung der Messleitungen gewährleistet.

Das erfindungsgemässe Bauteil 1 zum Niederhalten von Messleitungen in dafür vorgesehene Nuten 6 von Maschinenteilen 5 ist kostengünstig herstellbar, denn es ist ein sehr einfach gestaltetes Bauteil. Ausserdem sind vorteilhaft zur Montage der Scheibe 1 in die Nut 6 keine Spezialwerkzeuge notwendig. Die in die Nut 6 des Maschinenteiles 5 einzubringende Bohrung 7 zur Aufnahme der Scheibe 1 ist eine ganz normale Bohrung ohne eine speziell erforderliche Toleranz bzw. ohne eine hinterstochene Nut. Mit dieser technischen Lösung ist auch eine einfache Möglichkeit zur Standardisierung gegeben. Neue Scheiben passen problemlos in alte Bohrungen und alte Scheiben in neue Bohrungen.

### Bezugszeichenliste

- 1: Scheibe
- 2: Zentral angeordnete Öffnung (Innensechskant)
- 3: Schneidkante
- 3',3": Teilschneidkante
- 4',4": Ausnehmung
- 5: Maschinenteil
- 6: Nut in Pos. 5
- 7: Bohrung zur Aufnahme von Pos. 1

- h: Höhe von Pos. 1
- d: Durchmesser von Pos. 1
- α/2: Flankenwinkel
- B: Breite von Pos. 6
- T: Tiefe von Pos. 6
- D: Durchmesser von Pos. 7

## Patentansprüche

1. Bauteil zum Niederhalten von Messleitungen und Messvorrichtungen in einer dafür vorgesehenen Nut (6) eines Maschinenteiles (5) wobei das Bauteil in Form einer Scheibe (1) ausgebildet ist, **dadurch gekennzeichnet, daß** die Scheibe (1) an ihrem Umfang eine Schneidkante (3) aufweist, wobei die Schneidkante (3) nicht durchgängig über dem gesamten Umfang ausgebildet ist, sondern aus zwei sich umfangsmässig gegenüberliegenden Teilschneidkanten (3', 3") besteht.

2. Bauteil nach Anspruch 1, **dadurch gekennzeichnet, dass** die Scheibe (1) eine zentral angeordnete Öffnung (2) in Form eines Innensechskantes aufweist.

3. Bauteil nach Anspruch 1 und 2, **dadurch gekennzeichnet, dass** die Scheibe (1) an den Stellen, an denen umfangsmässig keine Schneidkante (3) angeordnet ist, eine seitliche Ausnehmung (4', 4") aufweist.

4. Bauteil nach einem der Ansprüche 1 bis 3, **dadurch gekennzeichnet, dass** die Schneidkante (3) in halber Höhe (h) der Scheibe (1) angeordnet ist und einen Flankenwinkel (α/2) von 30 ° aufweist.

5. Bauteil nach einem der Ansprüche 1 bis 3, **dadurch gekennzeichnet, dass** die Scheibe (1) aus einem austenitischen Stahl besteht, während das Maschinenteil (5) mit der Nut (6) für die niederzuhaltenden Messleitungen aus einem ferritischen Material besteht.

6. Verfahren zum Einbau eines Bauteiles zum Niederhalten von Messleitungen und Messvorrichtungen in einer dafür vorgesehenen Nut (6) eines Maschinenteiles (5) nach einem der Ansprüche 1 bis 5, wobei in der Nut (6) zwecks Aufnahme des Bauteiles in Form einer Scheibe (1) eine Bohrung (7) mit einem grösseren Durchmesser (D) als die Nutbreite (B) und einer geringeren Tiefe (t) als die Nuttiefe (T) vorhanden ist, und der Durchmesser (D) der Bohrung (7) nur geringfügig grösser als der Durchmesser (d) der Scheibe (1) ist, **dadurch gekennzeichnet, dass**
a) die Scheibe (1) derart in die Bohrung (7) eingelegt wird, dass ihre beiden Teilschneidkanten (3', 3") in Längsrichtung der Nut (6) weisen,
b) ein Innensechskant-Schlüssel in die Öffnung (2) der Scheibe (1) eingeführt wird und
c) der Schlüssel bei gleichzeitigem Nachuntendrücken der Scheibe (1) gedreht wird, so dass sich die Schneidkanten (3', 3") in das Material des Maschinenteiles (5) einschneiden und festklemmen.

## Claims

1. Component for holding down measuring leads and measuring devices in a groove (6), provided therefor, of a machine part (5), wherein the component is designed in the form of a disc (1), **characterized in that** the disc (1) has a cutting edge (3) on its circumference, the cutting edge (3) not being formed continuously over the entire circumference but consisting of two partial cutting edges (3', 3'') circumferentially opposite one another.

2. Component according to Claim 1, **characterized in that** the disc (1) has a central opening (2) in the form of a hexagon socket.

3. Component according to Claims 1 and 2, **characterized in that** the disc (1) has a lateral recess (4', 4") at the locations where no cutting edge (3) is arranged at the circumference.

4. Component according to one of Claims 1 to 3, **characterized in that** the cutting edge (3) is arranged at half the height (h) of the disc (1) and has a flank angle (α/2) of 30°.

5. Component according to one of Claims 1 to 3, **characterized in that** the disc (1) is made of an austenitic steel, whereas the machine part (5) with the groove (6) for the measuring leads to be held down is made of a ferritic material.

6. Method of fitting a component for holding down measuring leads and measuring devices in a groove (6), provided therefor, of a machine part (5) according to one of Claims 1 to 5, there being a hole (7) in the groove (6) for the purpose of accommodating the component in the form of a disc (1), this hole (7) having a larger diameter (D) than the groove width (B) and a smaller depth (t) than the groove depth (T), and the diameter (D) of the hole (7) being only slightly larger than the diameter (d) of the disc (1), **characterized in that**
a) the disc (1) is put into the hole (7) in such a way that its two partial cutting edges (3', 3") point in the longitudinal direction of the groove (6),
b) a hexagon socket key is inserted into the opening (2) of the disc (1), and
c) the key is turned while the disc (1) is pressed down at the same time, so that the cutting edges (3', 3") cut into the material of the machine part (5) and jam tight.

## Revendications

1. Composant en vue de maintenir des conduites de mesure et des dispositifs de mesure dans une rainure (6) prévue à cet effet d'une pièce de machine (5), le composant étant réalisé sous la forme d'un disque (1), **caractérisé en ce que** le disque (1) présente à sa périphérie une arête de coupe (3), l'arête de coupe (3) étant réalisée de manière à ne pas traverser l'ensemble de la périphérie mais étant constituée de deux arêtes de coupe partielles (3', 3") opposées au niveau de la périphérie.

2. Composant selon la revendication 1, **caractérisé en ce que** le disque (1) présente une ouverture (2) disposée de manière centrale sous la forme d'un six pans creux.

3. Composant selon les revendications 1 et 2, **caractérisé en ce que** le disque (1) présente un évidement latéral (4', 4") aux points auxquels aucune arête de coupe (3) n'est disposée au niveau de la périphérie.

4. Composant selon l'une quelconque des revendications 1 à 3, **caractérisé en ce que** l'arête de coupe (3) est disposée à mi-hauteur (h) du disque (1) et présente un angle d'engrenage (α/2) de 30°.

5. Composant selon l'une quelconque des revendications 1 à 3, **caractérisé en ce que** le disque (1) se compose d'un acier austénitique tandis que la pièce de machine (5) avec la rainure (6) pour les conduites de mesure à maintenir se compose d'un matériau ferritique.

6. Procédé en vue du montage d'un composant en vue de maintenir des conduites de mesure et des dispositifs de mesure dans une rainure (6) prévue à cet effet d'une pièce de machine (5) selon l'une quelconque des revendications 1 à 5, un alésage (7) avec un diamètre (D) supérieur à la largeur de rainure (B) et une profondeur (t) inférieure à la profondeur de rainure (T) étant présent dans la rainure (6) en vue de la réception du composant sous la forme d'un disque (1) et le diamètre (D) de l'alésage (7) n'étant que légèrement supérieur au diamètre (d) du disque (1), **caractérisé en ce que**
a) le disque (1) est introduit dans l'alésage (7) de sorte que ses deux arêtes de coupe partielles (3', 3") sont orientées dans la direction longitudinale de la rainure (6),
b) une clé à six pans creux est insérée dans l'ouverture (2) du disque (1) et
c) la clé est tournée tout en appuyant simultanément vers le bas sur le disque (1) de sorte que les arêtes de coupe (3', 3") creusent dans et bloquent le matériau de la pièce de machine (5).
